Europäisches Patentamt

European Patent Office

Office européen des brevets

(11) Veröffentlichungsnummer: **0 394 759**
**A1**

(12) **EUROPÄISCHE PATENTANMELDUNG**

(21) Anmeldenummer: 90106979.9

(22) Anmeldetag: 11.04.90

(51) Int. Cl.⁵: **C08G 18/77, C08G 18/71, C09D 175/00, C09K 3/10**

(30) Priorität: 24.04.89 DE 3913406

(43) Veröffentlichungstag der Anmeldung:
31.10.90 Patentblatt 90/44

(84) Benannte Vertragsstaaten:
**AT BE CH DE ES FR GB IT LI NL**

(71) Anmelder: **BAYER AG**

**D-5090 Leverkusen 1 Bayerwerk(DE)**

(72) Erfinder: **Schmalstieg, Lutz, Dr.**
**Balthasarstrasse 14**
**D-5000 Köln 1(DE)**
Erfinder: **Nachtkamp, Klaus, Dr.**
**Silcherstrasse 13**
**D-4000 Düsseldorf 13(DE)**
Erfinder: **Pedain, Josef, Dr.**
**Haferkamp 6**
**D-5000 Köln 80(DE)**

(54) Verfahren zur Herstellung von Ester- und Isocyanatgruppen aufweisenden Prepolymeren und ihre Verwendung als Bindemittel.

(57) Ein Verfahren zur Herstellung von Ester- und Isocyanatgruppen aufweisenden Prepolymeren durch Umsetzung von
a) Isocyanatocarbonsäurechloriden mit
b) organischen Polyhydroxylverbindungen des Molekulargewichtsbereichs 400 bis 20.000 mit ausschließlich O-silylierten Hydroxylgruppen
und die Verwendung der so erhaltenen Prepolymeren als Bindemittel für feuchtigkeitshärtende Beschichtungsmittel oder Dichtmassen.

EP 0 394 759 A1

## Verfahren zur Herstellung von Ester- und Isocyanatgruppen aufweisenden Prepolymeren und ihre Verwendung als Bindemittel

Die vorliegende Erfindung betrifft ein neues Verfahren zur Herstellung von Isocyanatgruppen aufweisenden Prepolymeren, sowie die Verwendung der Verfahrensprodukte als feuchtigkeitshärtende Beschichtungsmittel oder Dichtungsmassen.

Isocyanatgruppen aufweisende Prepolymere werden üblicherweise durch Reaktion von höhermolekularen Polyhydroxylverbindungen mit überschüssigen Mengen niedermolekularer Di- oder Polyisocyanate hergestellt. In der Regel enthalten die Reaktionsprodukte zunächst größere Anteile monomerer Di- oder Polyisocyanate. Diese müssen im allgemeinen, schon aus arbeitshygienischen Gründen, entfernt werden, was z.B. durch Dünnschichtdestillation gelingt.

Die dabei erhaltenen monomerenfreien NCO-Prepolymere weisen stets wesentlich höhere Viskositäten als die Aus gangsverbindungen auf. Daher können solche Prepolymere vielfach nur unter Zusatz von organischen Lösungsmitteln oder Weichmachern zur Herstellung von Lacken oder Beschichtungsstoffen eingesetzt werden.

Die Verwendung von Lösungsmitteln ist aber bekanntlich unter ökologischen Gesichtspunkten von Nachteil. Auch der Einsatz von Weichmachern ist mit Nachteilen verbunden. Weichmacher verbleiben in den Beschichtungen, können die mechanischen Eigenschaften der Polymere verschlechtern, die Haftung zum Substrat beeinträchtigen und schließlich auf lange Sicht aus den Beschichtungen auswandern.

Es war daher die der Erfindung zugrundeliegende Aufgabe, ein neues Verfahren zur Herstellung von höhermolekularen, monomerenfreien Isocyanat-Prepolymeren zur Verfügung zu stellen, welches nicht mit den genannten Nachteilen behaftet ist, d.h., welches inbesondere zu NCO-Prepolymeren führt, deren Viskosität etwa der Viskosität der entsprechenden Polyhydroxylverbindungen entspricht.

Diese Aufgabe konnte mit der Bereitstellung des nachstehend näher beschriebenen erfindungsgemäßen Verfahrens gelöst werden. Bei dem erfindungsgemäßen Verfahren werden die als Ausgangsmaterialien eingesetzten, höhermolekularen Polyhydroxylverbindungen in O-silylierter Form mit Isocyanatocarbonsäurechloriden zur Reaktion gebracht, wobei NCO-Prepolymere erhalten werden, deren Viskosität etwa den Viskositäten der zugrundeliegenden unsilylierten Polyhydroxylverbindungen entspricht.

Die Umsetzung von Isocyanatocarbonsäurechloriden mit O-silylierten Alkoholen ist zwar aus der DE-OS 3 634 248 bereits bekannt, jedoch befaßt sich diese Vorveröffentlichung ausschließlich mit der Herstellung von niedermolekularen, Ester- und/oder Amidgruppen aufweisenden Isocyanaten, so daß aufgrund der DE-OS 3 634 248 nicht vorhersehbar war, daß nach dem Prinzip des erfindungsgemäßen Verfahrens Isocyanatgruppen aufweisende Prepolymere zugänglich sein würden, die sich bezüglich ihrer Viskosität kaum von der Viskosität der entsprechenden Polyhydroxylverbindungen unterscheiden.

Das erfindungsgemäße Verfahren führt zu Ester- und Isocyanatgruppen aufweisenden Prepolymeren, wie sie bereits in DE-OS 2 120 090 im Prinzip beschrieben sind. Gemäß dieser Vorveröffentlichung werden die Verbindungen jedoch durch Umsetzung von Polyhydroxylverbindungen mit freien Hydroxylgruppen mit Isocyanatocarbonsäurechloriden in Gegenwart eines Halogen-Wasserstoff-Absorbers hergestellt. Die Nachteile dieses Verfahrens sind insbesondere in der Bildung von hohen Mengen an Salzen und wesentlich höheren Viskositäten der resultierenden NCO-Prepolymeren im Vergleich zu den entsprechenden Polyhydroxylverbindungen zu sehen.

Gegenstand der Erfindung ist ein Verfahren zur Herstellung von Ester- und Isocyanatgruppen aufweisenden Prepolymeren durch Umsetzung von

a) Isocyanatocarbonsäurechloriden mit

b) organischen Verbindungen, die mindestens zwei silylierte alkoholische Hydroxylgruppen aufweisen und ansonsten unter den jeweiligen Reaktionsbedingungen gegenüber Isocyanat- und Chlorcarbonylgruppen inert sind, dadurch gekennzeichnet, daß man als Verbindungen b) organische Polyhydroxylverbindungen des Molekulargewichtsbereichs 400 bis 20 000 mit ausschließlich O-silylierten Hydroxylgruppen verwendet.

Gegenstand der Erfindung ist auch die Verwendung der nach diesem Verfahren erhaltenen, Ester- und Isocyanatgruppen aufweisenden Prepolymeren als Bindemittel für feuchtigkeitshärtende Beschichtungsmittel oder Dichtungsmassen.

Als Komponente a) werden beim erfindungsgemäßen Verfahren Isocyanatocarbonsäurechloride, d.h., beliebige organische Verbindungen eingesetzt, die mindestens eine Isocyanat- und mindestens eine Chlorcarbonylgruppe pro Molekül aufweisen und die, von der Chlorcarbonylgruppe abgesehen, gegenüber silylierten Hydroxylverbindungen der als Komponente b) eingesetzten Art unter den Verfahrensbedingungen inert sind. Vorzugsweise werden als Ausgangskomponenten a) Isocyanatocarbonsäurechloride der allgemeinen Formel Cl-CO-B-NCO

eingesetzt, für welche

B für einen gegenüber silylierten Hydroxylgruppen inerten organischen Rest, vorzugsweise einen aliphatischen Kohlenwasserstoffrest mit 2 bis 11 Kohlenstoffatomen oder einen cycloaliphatischen Kohlenwasserstoffrest mit 6 Kohlenstoffatomen steht, mit der Maßgabe, daß zwischen der Carbonylgruppe und der Isocyanatgruppe mindestens zwei Kohlenstoffatome angeordnet sind.

Beispiele für geeignete Isocyanatocarbonsäurechloride a) sind 3-Isocyanatopropionsäurechlorid, 4-Isocyanatobuttersäurechlorid, 6-Isocyanatocapronsäurechlorid, 12-Isocyanatododecansäurechlorid oder 4-Isocyanatocyclohexancarbonsäurechlorid.

Als Ausgangskomponente a) ebenfalls geeignet, jedoch weniger bevorzugt sind beispielsweise auch Isocyanatocarbonsäurechloride der genannten allgemeinen Formel, für welche B für einen gegebenenfalls weitere, unter den Reaktionsbedingungen inerte Substituenten aufweisenden aromatischen Kohlenwasserstoffrest mit 6 bis 10 Kohlenstoffatomen, insbesondere einen Phenylenrest steht.

Als Beispiel für derartige Verbindungen sei 4-Isocyantobenzoesäurechlorid genannt.

Als Komponente b) werden beim erfindungsgemäßen Verfahren höhermolekulare Polyhydroxylverbindungen mit einem gelpermeationschromatographisch (Molekulargewichte oberhalb 5.000) bzw. aus Hydroxylgruppengehalt und OH-Funktionalität (Molekulargewichte bis 5.000) bestimmbaren mittleren Molekulargewicht von 400 bis 20 000 eingesetzt, deren Hydroxylgruppen vorab vollständig silyliert worden sind. Die hier und auch nachfolgend genannten Molekulargewichte beziehen sich auf die Molekulargewichte der nicht silylierten Polyhydroxylverbindungen. Im übrigen weisen die Ausgangskomponenten b), von den silylierten Hydroxylgruppen abgesehen, keine unter den Reaktionsbedingungen gegenüber Säurechlorid- und Isocyanatgruppen reaktionsfähige Gruppen auf, wobei in erster Näherung die gegebenenfalls in den Ausgangsverbindungen b) vorliegenden Urethangruppen ebenfalls als unter den Reaktionsbedingungen inert angesehen werden können.

Die Herstellung der silylierten Ausgangskomponenten b) in Analogie zu an sich bekannten Methoden (vgl. z.B. B.M. Lalonde und C.H. Chan, Synthesis (1985), Seiten 817 bis 845) erfolgt durch Umsetzung von geeigneten Polyhydroxylverbindungen mit Chlorsilanen oder Disilazanen der allgemeinen Formeln

$R_3SiCl$ bzw. $R_3Si-NH-SiR_3$

In den beiden letztgenannten Formeln steht R für einen beliebigen Alkyl- oder Arylrest, vorzugsweise für einen Alkylrest mit 1 bis 4 Kohlenstoffatomen oder einen Phenylrest, insbesondere einen Methylrest. Die Natur des Restes R ist jedoch für die Durchführbarkeit des erfindungsgemäßen Verfahrens von untergeordneter Bedeutung.

Die Silylierung der Polyhydroxylverbindungen gelingt beispielsweise durch Umsetzung mit Disilazanen der genannten allgemeinen Formel unter Einhaltung eines Molverhältnisses von Hydroxylgruppen zu Disilazan von ca. 1:0,7 bei 60 - 140 °C, gegebenenfalls in Gegenwart saurer Katalysatoren wie beispielsweise p-Toluolsulfonsäure oder Trimethylchlorsilan, wobei das Ende der Umsetzung an der Beendigung der Ammoniak-Abspaltung erkannt werden kann. Dabei können auch geeignete inerte Lösungsmittel mitverwendet werden, wie z.B. Kohlenwasserstoffe, Ethylacetat, Butylacetat, Methoxypropylacetat oder Methylisobutylketon bzw. Gemische derartiger Lösungsmittel.

Die zur Herstellung der Komponente b) geeigneten Polyhydroxylverbindungen weisen mindestens 2, vorzugsweise 2 bis 10 und besonders bevorzugt 2 bis 4 end-und/oder seitenständige Hydroxylgruppen auf.

Grundsätzlich geeignet sind die an sich bekannten höhermolekularen Polyole, wie sie als Rohstoffe in der Polyurethan-Chemie Verwendung finden. Vertreter solcher Verbindungen sind z.B. in High Polymers, Vol. XVI, "Polyurethanes, Chemistry and Technology", verfaßt von Saunders-Frisch, Interscience Publishers, New York, London, Band I, 1962, Seiten 32-42 und Band II, 1964, Seiten 5-6 und 198-199, sowie im Kunststoff-Handbuch, Band VII, Vieweg-Höchtlen, Carl-Hanser-Verlag, München, 1966, z.B. auf den Seiten 45-71, beschrieben.

Vorzugsweise handelt es sich bei den Polyhydroxylverbindungen um Ether-, Ester-, Carbonat- und/oder Urethangruppen aufweisende Polyhydroxylverbindungen des Molekulargewichtsbereichs 800 bis 5000. Es können sowohl Polyhydroxylverbindungen eingesetzt werden, die eine Art der genannten Gruppierungen aufweisen als auch solche, die gleichzeitig zwei oder mehrere Gruppierungen der genannten Art in einem Molekül aufweisen. Auch die Verwendung von Gemischen unterschiedlicher Polyhydroxylverbindungen der genannten Art in O-silylierter Form ist möglich.

Die erfindungsgemäß in Frage kommenden Polyether-Polyole werden z.B. durch Polymerisation von Epoxiden wie Ethylenoxid, Propylenoxid, Butylenoxid, Tetrahydrofuran, Styroloxid oder Epichlorhydrin mit sich selbst, z.B. in Gegenwart von Lewis-Katalysatoren wie $BF_3$, oder durch Anlagerung dieser Epoxide, vorzugsweise von Ethylenoxid und Propylenoxid, gegebenenfalls im Gemisch oder nacheinander, an Starterkomponenten mit reaktionsfähigen Wasserstoffatomen wie Wasser, Alkohole, Ammoniak oder Amine, z.B. Ethylenglykol, Propylenglykol-(1,3) oder -(1,2), Trimethylolpropan, Glycerin, Sorbit, 4,4'-Dihydroxy-diphenylpropan, Anilin, Ethanolamin oder Ethylendiamin hergestellt. Auch Sucrosepolyether, wie sie z.B. in den DE-Auslegeschriften 1 176 358 und 1 064 938 beschrieben werden, sowie auf Formit oder Formose gestartete Polyether (DE-Offenlegungsschriften 2 639 083 bzw. 2 737 951), können eingesetzt werden.

Auch die in Frage kommenden Polyester-Polyole sind solche der bekannten Art und sind z.B. Umsetzungsprodukte von mehrwertigen, vorzugsweise zweiwertigen und gegebenenfalls zusätzlich dreiwertigen Alkoholen mit mehrwertigen, vorzugsweise zweiwertigen Carbonsäuren. Anstelle der freien Polycarbonsäuren können auch die entsprechenden Polycarbonsäureanhydride oder entsprechende Polycarbonsäureester von niedrigen Alkoholen oder deren Gemische zur Herstellung der Polyester verwendet werden. Die Polycarbonsäuren können aliphatischer, cycloaliphatischer, aromatischer und/oder heterocyclischer Natur sein und gegebenenfalls, z.B. durch Halogenatome, substituiert und/oder ungesättigt sein.

Als Beispiele für solche Carbonsäuren und deren Derivate seien genannt:

Bernsteinsäure, Adipinsäure, Korksäure, Azelainsäure, Sebacinsäure, Phthalsäure, Isophthalsäure, Trimellitsäure, Phthalsäureanhydrid, Tetrahydrophthalsaureanhydrid, Hexahydrophthalsäureanhydrid, Tetrachlorphthalsäureanhydrid, Endomethylentetrahydrophthalsäureanhydrid, Glutarsäureanhydrid, Maleinsaure, Maleinsäureanhydrid, Fumarsäure, dimerisierte und trimerisierte ungesättigte Fettsäuren, gegebenenfalls in Mischung mit monomeren ungesättigten Fettsäuren, wie Ölsäure; Terephthalsäuredimethylester und Terephthalsäure-bis-glykolester. Als mehrwertige Alkohole kommen z.B. Ethylenglykol, Propylenglykol-(1,2) und -(1,3), Butylenglykol-(1,4) und -(2,3), Hexandiol-(1,6), Octandiol-(1,8), Neopentylglykol, 1,4-Bis-hydroxymethylcyclohexan, 2-Methyl-1,3-propandiol, Glycerin, Trimethylolpropan, Hexantriol-(1,2,6), Butantriol-(1,2,4), Trimethylolethan, Pentaery thrit, Chinit, Mannit und Sorbit, Formit, Methylglykosid, ferner Diethylenglykol, Triethylenglykol, Tetraethylenglykol und höhere Polyethylenglykole, Dipropylenglykol und höhere Polypropylenglykole sowie Dibutylenglykol und höhere Polybutylenglykole in Frage. Auch Polyester aus Lactonen, z.B. ε-Caprolacton, oder aus Hydroxycarbonsäuren, z.B. ω-Hydroxycapronsäure, sind einsetzbar.

Als Hydroxylgruppen aufweisende Polycarbonate kommen solche der an sich bekannten Art in Betracht, die z.B. durch Umsetzung von Diolen wie Propandiol-(1,3), Butandiol-(1,4) und/oder Hexandiol-(1,6), Diethylenglykol, Triethylenglykol, Tetraethylenglykol oder Thiodiglykol mit Diarylcarbonaten, z.B. Diphenylcarbonat, oder Phosgen hergestellt werden können (DE-Auslegeschriften 1 694 080, 1 915 908 und 2 221 751; DE-Offenlegungsschrift 2 605 024).

Sehr gut geeignet sind auch Hydroxylgruppen aufweisende Polyester-Polycarbonate, wie sie z.B. gemäß DE-AS 1 770 245 zugänglich sind. Solche Verbindungen werden z.B. durch Reaktion von ε-Caprolacton mit Polyolen, wie z.B. Hexandiol-1,6, und anschließende Umsetzung der so erhaltenen Esterglykole mit Diphenylcarbonat hergestellt.

Die erfindungsgemäß in Frage kommenden Polyurethan-Polyole werden durch Umsetzung solcher höhermolekularer Polyhydroxylverbindungen oder von niedermolekularen Polyolen wie z.B. Ethylenglykol, Propylenglykol-(1,2) und -(1,3), Butylenglykol-(1,4) und -(2,3), Hexandiol-(1,6), Octandiol-(1,8), Neopentylglykol, 1,4-Bis-hydroxymethylcyclohexan, 2-Methyl-1,3-propandiol, Glycerin, Trimethylolpropan, Diethylenglykol, Dipropylenglykol oder von Gemischen aus nieder- und höhermolekularen Polyolen mit Polyisocyanaten, wie z.B. 2,4-und 2,6-Toluylendiisocyanat sowie beliebigen Gemischen dieser Isomeren, Diphenylmethan-2,4'- und/oder -4,4'-diisocyanat, 1,6-Hexamethylendiisocyanat, Cyclohexan-1,3-und -1,4-diisocyanat sowie beliebigen Gemischen dieser Isomeren, 1-Isocyanato-3,3,5-trimethyl-5-isocyanatomethyl-cyclohexan (Isophorondiisocyanat), 4,4'-Dicyclohexylmethandiisocyanat und/oder Biuret- oder Isocyanuratgruppen aufweisenden Addukten der obengenannten Polyisocyanate hergestellt. Das Mengenverhältnis von Polyhydroxylverbindung zu Polyisocyanat wird dabei so gewählt, daß die Hydroxylgruppen im stöchiometrischen Überschuß gegenüber den Isocyanatgruppen vorliegen.

Bei den bevorzugten Ausgangskomponenten b) handelt es sich um solche der allgemeinen Formel

$$A\left[O\text{-}SiR_3\right]_n$$

für welche

n für eine ganze Zahl gleich oder größer als 2 steht,

A für einen organischen Rest steht, wie er durch Entfernung der Hydroxylgruppen aus einem n-wertigen Alkohol des Molekulargewichtsbereichs 400 bis 20 000 erhalten wird, und

R für einen Alkylrest mit 1 bis 4 Kohlenstoffatomen oder einen Phenylrest steht.

Besonders bevorzugt werden solche Verbindungen b) der zuletztgenannten allgemeinen Formel verwendet, für welche

A für einen Rest steht, wie er durch Entfernung der Hydroxylgruppen aus einem Ether-, Ester-, Carbonat-und/oder Urethangruppen aufweisenden mehrwertigen Alkohol des Molekulargewichtsbereichs 800 bis 5000 erhalten worden ist, und

n eine Zahl von 2 bis 10 bedeutet.

Bei der Durchführung des erfindungsgemäßen Verfahrens werden die Mengenverhältnisse der Reaktionspartner so gewählt, daß das Molverhältnis von Chlorcarbonylgruppen zu silylierten Hydroxylgruppen bei mindestens 1:1,2, vorzugsweise bei 1:0,8 bis 1:1,2, liegt. Vorzugsweise wird unter Einhaltung von äquimolaren Mengen der Einsatzstoffe gearbeitet. Es ist jedoch auch möglich, einen beträchtlichen Überschuß an Isocyanatocarbonsäurechlorid einzusetzen und nach Beendigung der Umsetzung den nicht abreagierten Überschuß beispielsweise destillativ zu entfernen. Eine derartige Arbeitsweise ist jedoch keineswegs bevorzugt.

Die Umsetzung der silylierten Hydroxylverbindungen Isocyanatosäurechloriden erfolgt im allgemeinen im Temperaturbereich von 50 bis 150 ° C, gegebenenfalls unter Zusatz der für diese Reaktion bekannten Katalysatoren wie z.B. Chinolin oder Pyridin.

Als Nebenprodukte der erfindungsgemäßen Umsetzung entsteht ein Trialkyl- oder Triaryl-chlorsilan, das sich destillativ bequem aus dem Reaktionsgemisch entfernen läßt.

Die Reaktion kann in An- und Abwesenheit eines Lösungsmittels durchgeführt werden. Geeignete Lösungsmittel sind insbesondere aliphatische, cycloaliphatische und aromatische Kohlenwasserstoffe, Ether, Ketone, Ester usw., welche keine aktiven Wasserstoffatome enthalten. Auf die Mitverwendung von Lösungsmitteln kann im allgemeinen verzichtet werden, wenn die eingesetzten silylierten Hydroxylverbindungen eine zur Durchführung des erfindungsgemäßen Verfahrens ausreichend niedrige Viskosität aufweisen.

Entsprechend der Aufgabenstellung der vorliegenden Erfindung, möglichst lösungsmittelarme Polyisocyanat-Prepolymere zur Verfügung zu stellen, ist die Verfahrensweise ohne Mitverwendung von Lösungsmitteln besonders bevorzugt. Die Entfernung von Resten flüchtiger Bestandteile aus den Prepolymeren kann durch Dünnschichtdestillation erfolgen.

Die so erhaltenen Polyisocyanat-Prepolymere zeichnen sich durch Monomerenfreiheit und ungewöhnlich niedrige Viskositäten aus.

Die erfindungsgemäß hergestellten Polyisocyanat-Prepolymere eignen sich insbesondere als Rohstoffe zur Formulierung von lösungsmittelfreien oder lösungsmittelarmen Beschichtungsmitteln oder Dichtungsmassen. Die Prepolymere lassen sich, gegebenenfalls nach Zusatz an sich bekannter Katalysatoren, wie z.B. Dibutylzinn-(IV)-dilaurat und gegebenenfalls den in der Beschichtungstechnologie üblichen Pigmenten, Füll- und Hilfsstoffen durch die Einwirkung von Luftfeuchtigkeit aushärten und ergeben Polymerfilme mit ausgezeichneten mechanischen Eigenschaften.

Die folgenden Beispiele sollen das erfindungsgemäße Verfahren erläutern, jedoch nicht einschränken. Alle Prozentangaben beziehen sich auf Gewichtsprozente.

Beispiele

Allgemeine Herstellungsvorschrift für die Silylierung der Polyhydroxylverbindungen

1 OH-Äquivalent einer Polyhydroxylverbindung und 0,7 Mol Hexamethyldisilazan werden unter Zusatz von 2 ml Trimethylchlorsilan bei 80 - 120 ° C bis zum Ende der Ammoniakabspaltung gerührt. Die Reaktion kann IR-spektroskopisch anhand der Abnahme der OH-Bande verfolgt werden. Sobald keine OH-Bande mehr sichtbar ist, wird überschüssiges Disilazan durch Destillation unter vermindertem Druck entfernt.

In den nachfolgenden Beispielen 1 bis 6 werden stets die silylierten Polyhydroxylverbindungen b) in einem geeigneten Reaktionsgefäß vorgelegt und das Isocyanatocarbonsäurechlorid a) anschließend unter den genannten Reaktionsbedingungen unter Rühren zudosiert.

Beispiel 1

Prepolymer auf Basis eines silylierten Polyethers:

1073 g eines Bis-Trimethylsiloxy-Polyethers aus Polypropylenglykol der OH-Zahl 56 und der Viskosität 300 mPa.s (22 ° C) und 175,5 g 6-Isocyanatocapronsäurechlorid werden unter Zusatz von 1 ml Pyridin bei 80 -100 ° C gerührt, bis das IR-Spektrum keine Säurechloridbande mehr zeigt. Während der Umsetzung wird entstehendes Trimethylchlorsilan laufend abdestilliert. Nach Entfernen von Resten flüchtiger Bestandteile durch Dünnschichtdestillation bei 140 ° C/ 0,05 mbar erhält man ein NCO-Prepolymer mit folgenden Kenndaten:
NCO-Gehalt: 3,34 %
Viskosität bei 22 ° C: 480 mPa.s

Beispiel 2

Prepolymer auf Basis eines silylierten Polyestercarbonats:

1073 g eines Bis-Trimethylsiloxy-Polyestercarbonats (zugrundeliegendes Polyestercarbonatdiol: hergestellt gemäß DE-AS 1 770 245 aus Hexandiol-1,6, Caprolacton und Diphenylcarbonat, OH-Zahl = 56, Viskosität bei 22°C = 20 000 mPa.s) wird wie in Beispiel 1 mit 175,5 g 6-Isocyanatocapronsäurechlorid umgesetzt. Das erhaltene NCO-Prepolymer besitzt nach Entfernung von Resten flüchtiger Bestandteile durch Dünnschichtdestillation folgende Kenndaten:
NCO-Gehalt: 3,2 %
Viskosität bei 22°C: 20 000 mPa.s

## Beispiel 3

Prepolymer auf Basis eines silylierten Polyesters:

1373 g eines Bis-Trimethylsiloxy-Polyesters aus Adipinsäure und Diethylenglykol (zugrundeliegendes Polyesterdiol: OH-Zahl = 43, Viskosität bei 22°C = 15 000 mPa.s) wird wie in Beispiel 1 mit 175,5 g 6-Isocyanatocapronsäurechlorid umgesetzt. Nach Entfernen von Resten flüchtiger Bestandteile durch Dünnschichtdestillation besitzt das erhaltene NCO-Prepolymer folgende Kenndaten:
NCO-Gehalt: 2,1 %
Viskosität bei 22°C: 30 000 mPa.s

## Beispiel 4

Prepolymer auf Basis eines silylierten Urethangruppenhaltigen Polyethers:

1725 g eines OH-funktionellen Prepolymers aus 4 Mol Polyether gemäß Beispiel 1 und 1 Mol 2,4-Toluylendiisocyanat (Viskosität bei 22°C = 3000 mPa.s) wird vollständig silyliert und dann wie in Beispiel 1 mit 175,5 g 6-Isocyanatocapronsäurechlorid umgesetzt. Nach Entfernen von Resten flüchtiger Bestandteile durch Dünnschichtdestillation erhält man ein NCO-Prepolymer mit folgenden Kenndaten:
NCO-Gehalt: 1,9 %
Viskosität bei 22°C: 4700 mPa.s

## Beispiel 5

Prepolymer auf Basis eines silylierten Polyethers:

1073 g eines Tris-Trimethylsiloxy-Polyethers aus Trimethylolpropan und Propylenoxid (zugrundeliegendes Polyethertriol: OH-Zahl = 56, Viskosität bei 22°C = 650 mPa.s) und 175,5 g 6-Isocyanatocapronsäurechlorid werden wie in Beispiel 1 umgesetzt. Nach Entfernen von Resten flüchtiger Bestandteile durch Dünnschichtdestillation erhält man ein NCO-Prepolymer mit folgenden Kenndaten:
NCO-Gehalt: 3,45 %
Viskosität bei 22°C: 650 mPa.s

## Beispiel 6

Nicht erfindungsgemäßes Beispiel:

1000 g des Polyestercarbonats aus Beispiel 2 werden mit 168 g Hexamethylendiisocyanat bei 80°C bis zur Konstanz des NCO-Gehaltes umgesetzt. Man erhält ein NCO-Prepolymer mit einem NCO-Gehalt von 3,5 %, einer Viskosität von 500 000 mPa.s bei 22°C und einem Monomerengehalt von 3,1 %. Die hohe Viskosität des Prepolymers macht eine Dünnschichtdestillation unmöglich.

## Beispiel 7

Nicht erfindungsgemäßes Beispiel:

840 g Hexamethylendiisocyanat werden in ei-nem geeigneten Reaktionsgefäß vorgelegt. An-schließend werden unter fortgesetztem Rühren 1000 g des Polyestercarbonats aus Beispiel 2 bei 80°C allmählich zugegeben. Es wird bei 80°C bis zur Konstanz des NCO-Gehalts weitergerührt. Anschließend wird noch vorhandenes freies Diisocyanat durch Dünnschichtdestillation bei 130°C/0,05 mbar entfernt. Es resultiert ein NCO-Prepolymer mit folgenden Kenndaten:
NCO-Gehalt: 3,4 %
Monomerengehalt: 0,12 %
Viskosität: 70 000 mPa.s

## Beispiel 8

Nicht erfindungsgemäßes Beispiel:

(Vergleichsbeispiel im Hinblick auf DE-OS 2 120 090)

Man tropft ein Gemisch aus 1000 g des Polyestercarbonats aus Beispiel 2, 500 ml Ethylacetat und 102 g Triethylamin zu einer Lösung von 175,5 g 6-Isocyanatocapronsäurechlorid in 300 ml Ethylacetat bei Raumtemperatur langsam zu, so daß die Temperatur nicht über 30°C ansteigt. Man läßt über Nacht nachrühren und filtriert dann vom ausgefallenen Ammoniumsalz ab. Das Filtrat wird durch Dünnschichtverdampfung von flüchtigen Bestandteilen getrennt. Das erhaltene NCO-Prepolymer besitzt folgende Kenndaten:
NCO-Gehalt: 3,16 %
Viskosität bei 22°C: 80 000 mPa.s

Beispiel 9

Feuchtigkeitshärtende Beschichtungsmasse:

Eine Probe des gemäß Beispiel 2 hergestellten NCO-Prepolymers wird mit 0,05 Gew.-% Dibutylzinn(IV)dilaurat verrührt. Ein auf eine Glasplatte aufgebrachter Film trocknet an der Luft innerhalb von 12 h. Nach Alterung erhält man einen zähelastischen Film mit guter Abriebfestigkeit.

**Ansprüche**

1. Verfahren zur Herstellung von Ester- und Isocyanatgruppen aufweisenden Prepolymeren durch Umsetzung von
a) Isocyanatocarbonsäurechloriden mit
b) organischen Verbindungen, die mindestens zwei silylierte alkoholische Hydroxylgruppen aufweisen und ansonsten unter den jeweiligen Reaktionsbedingungen gegenüber Isocyanat- und Chlorcarbonylgruppen inert sind,
dadurch gekennzeichnet, daß man als Verbindungen b) organische Polyhydroxylverbindungen des Molekulargewichtsbereichs 400 bis 20 000 mit ausschließlich O-silylierten Hydroxylgruppen verwendet.

2. Verfahren gemäß Anspruch 1, dadurch gekennzeichnet, daß man als Verbindungen b) solche der allgemeinen Formel
$A \mathop{+}\limits O-SiR_3]_n$
verwendet, für welche
n für eine ganze Zahl gleich oder größer als 2 steht,
A für einen organischen Rest steht, wie er durch Entfernung der Hydroxylgruppen aus einem n-wertigen Alkohol des Molekulargewichtsbereichs 400 bis 20 000 erhalten wird, und
R für einen Alkylrest mit 1 bis 4 Kohlenstoffatomen oder einen Phenylrest steht.

3. Verfahren gemäß Anspruch 2, dadurch gekennzeichnet, daß man als Verbindungen b) solche der genannten Formel verwendet, für welche
A für einen Rest steht, wie er durch Entfernung der Hydroxylgruppen aus einem Ether-, Ester-, Carbonat- und/oder Urethangruppen aufweisenden mehrwertigen Alkohol des Molekulargewichtsbereichs 800 bis 5000 erhalten worden ist.

4. Verfahren gemäß Anspruch 2 und 3, dadurch gekennzeichnet, daß man solche Verbindungen b) der genannten allgemeinen Formel verwendet, für welche
n eine Zahl von 2 bis 10 bedeutet.

5. Verfahren gemäß Anspruch 1 bis 4, dadurch gekennzeichnet, daß man als Isocyanatocarbonsäurechloride a) solche der allgemeinen Formel
Cl-CO-B-NCO
verwendet, für welche
B unter den Reaktionsbedingungen gegenüber den Verbindungen b) inerten organischen Rest steht.

6. Verfahren gemäß Anspruch 5, dadurch gekennzeichnet, daß man solche Isocyanatocarbonsäurechloride a) der genannten allgemeinen Formel verwendet, für welche
B für einen aliphatischen Kohlenwasserstoffrest mit 2 bis 11 Kohlenstoffatomen oder einen cycloaliphatischen Kohlenwasserstoffrest mit 6 Kohlenstoffatomen steht.

7. Verwendung der gemäß Anspruch 1 bis 5 erhaltenen, Ester- und Isocyanatgruppen aufweisenden Prepolymeren als Bindemittel für feuchtigkeitshärtende Beschichtungsmittel oder Dichtungsmassen.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | EP-A-0 263 481 (BAYER)<br>* Ansprüche 1,2; Seite 2, Zeilen 35-42; Seite 3, Zeilen 9-15; Seite 4, Zeilen 9-19 * & DE-A-3 634 248 (Kat. D) .<br>--- | 1-7 | C 08 G 18/77<br>C 08 G 18/71<br>C 09 D 175/00<br>C 09 K 3/10 |
| Y | FR-A-2 134 463 (BAYER)<br>* Ansprüche 1-3; Seite 3, Zeile 3 - Seite 6, Zeile 4; Seite 7, Zeilen 9-23 * & DE-A-2 120 090 (Kat. D)<br>--- | 1-7 | |
| A | DE-A-1 668 069 (BAYER)<br>* Anspruch; Seite 2, Absatz 2 - Seite 3, Absatz 1 *<br>----- | 1 | |

**RECHERCHIERTE SACHGEBIETE (Int. Cl.5)**

C 08 G

Der vorliegende Recherchenbericht wurde für alle Patentansprüche erstellt

| Recherchenort | Abschlußdatum der Recherche | Prüfer |
|---|---|---|
| DEN HAAG | 10-08-1990 | VAN PUYMBROECK M.A. |